(19)

**Europäisches Patentamt**
**European Patent Office**
**Office européen des brevets**

(11)　**EP 4 715 753 A1**

(12)　**EUROPEAN PATENT APPLICATION**

(43) Date of publication:
　　25.03.2026　Bulletin 2026/13

(21) Application number: **25203659.5**

(22) Date of filing: **22.09.2025**

(51) International Patent Classification (IPC):
　　**G06V 10/28** (2022.01)　　　**G06V 10/764** (2022.01)
　　**G06V 10/82** (2022.01)

(52) Cooperative Patent Classification (CPC):
　　**G06V 10/82; G06V 10/28; G06V 10/764**

(84) Designated Contracting States:
　　**AL AT BE BG CH CY CZ DE DK EE ES FI FR GB
　　GR HR HU IE IS IT LI LT LU LV MC ME MK MT NL
　　NO PL PT RO RS SE SI SK SM TR**
　　Designated Extension States:
　　**BA**
　　Designated Validation States:
　　**GE KH LA MA MD TN**

(30) Priority:　**24.09.2024　US 202463698540 P
　　　　　　　18.09.2025　US 202519332655**

(71) Applicant: **STMicroelectronics International N.V.
　　1228 Plan-les-Ouates, Geneva (CH)**

(72) Inventors:
　• **SAH, Sudhakar
　　TORONTO, ON M5H 3G2 (CA)**
　• **SABOORI, Ehsan
　　TORONTO, ON M5H 3G2 (CA)**
　• **ROHMETRA, Honnesh
　　TORONTO, ON M5H 3G2 (CA)**

(74) Representative: **Casalonga
　　Casalonga & Partners
　　Bayerstraße 71/73
　　80335 München (DE)**

(54)　**SYSTEM AND METHOD FOR MACHINE LEARNING MODELS FOR COMPUTER VISION ON DEVICES**

(57)　A system and method are provided for implementing transformer-based computer vision models on resource-constrained devices. An input image is divided into tokens, each corresponding to a patch. A background-aware vision transformer (BAViT) classifies tokens as foreground or background using a lightweight architecture without a class token and with a linear classifier for token-wise prediction. Training utilizes an accumulative cross entropy loss that aggregates token-level losses to improve accuracy. Tokens classified as background are pruned, thereby reducing computational complexity, runtime memory, and inference latency. Foreground tokens are processed in a downstream transformer-based object detection model, such as YOLOS, to generate detection outputs. The BAViT module operates as a pre-processing stage, facilitating integration with detection models without retraining. Configurations include BAViT-small with two transformer layers suitable for edge devices, supporting applications such as security and inventory tracking.

FIG. 4

EP 4 715 753 A1

**Description**

RELATED APPLICATION

This application claims priority to United States Provisional Application for Patent No. 63/698,540, filed September 24, 2024, the contents of which are incorporated by reference in their entirety.

TECHNICAL FIELD

The following relates to systems and methods for implementing machine learning models for computer vision on devices.

BACKGROUND

Transformers [2] have already demonstrated their ability to outperform traditional methods in Natural Language Processing (NLP) with models like BERT [15] and RoBERTa [29]. They are now commonly used in modern vision-related tasks such as classification [35], object detection [21] [18] [11], segmentation [12], and pose estimation [33].
Traditional Convolutional Neural Networks (CNN) do not capture long-range relationships within images effectively. Vision Transformers (ViTs) [1] address this by capturing long-range dependencies between input tokens, making them a suitable choice for surpassing the performance of state-of-the-art CNN models.
Despite the advantages of ViTs over traditional CNN-based approaches, their high computational requirements pose constraint in deployment of these models on edge devices (e.g., on premises hardware). The ViT accepts small image patches (typically $16 \times 16$ size) called tokens. As image resolution increases, more input tokens are generated, which can enhance model performance but also introduces more complexity, impacting model throughput and latency.
It is desirable to generate models that perform, or can be adapted to perform, according to a variety of constraints, including restraints of so called edge devices, or to reduce runtime memory, or perform better or more efficient pruning, etc.
What follows is a discussion of existing approaches.

2.1 Vision Transformers

Transformers [2] have emerged as a dominant architecture in NLP (15) (29) as well as vision-related tasks [19] [11]. [1] achieved state-of-the-art performance for image classification when trained on large datasets. [19] and [11] shows that Vision Transformers (ViTs) can surpass the performance of YOLO [27] models while performing real-time inference. [21] employs a combination of CNN-based backbones followed by transformers to address object detection tasks. Swin-transformers [35] introduced new ViTs that can serve as general-purpose backbones for computer vision tasks. [18] replaced the traditional Convolutional Neural Networks (CNN)-based backbones in [21] with a transformer-based backbone for object detection. Similarly, innovations continue to enhance ViT capabilities, such as [37], which introduces a K-dimensional score map to provide localized information about image patches. Recent work by Fang et al. [11] proposes end to end object detection as sequence-to-sequence task.

2.2 Runtime Memory Improvement

ViTs [1] require substantial runtime memory, which limits their use on smaller devices. Many research efforts, including [24] [30] [34], propose methods to optimize the performance of vision transformers. [22] introduces architectural changes to the residual layers, replacing them with reversible residual layers to make the model more lightweight. Meanwhile, [24] proposes an alternative attention formulation through sparse factorizations of the attention matrix, which is one of the most computationally expensive components in ViTs. [6] enhances the efficiency of DETR [21]-like models by substituting dense attention with deformable attention. Other works, such as [4], replace standard dropout layers with structured dropout layers to improve the efficiency and robustness of transformers. Some methods focus on pruning heads by ranking them based on their estimated importance [9]. Additionally, quantization approaches [3] [26] [5] have been explored to further improve the efficiency of ViTs.

2.3 Token Pruning

The number of tokens contribute to quadratic complexity in ViTs during inference. Additionally, not all tokens generated from the input image are equally important; many primarily contain background information. Several research efforts, including [32] [31] [28] [6] [7], propose efficient approaches to remove unnecessary tokens, thereby improving the inference time. [7] introduces a technique that efficiently scores the importance of tokens, discards background queries, and enhances the semantic interaction of fine-grained object queries based on these scores. [28] proposes an adaptive method to hierarchically discard useless tokens and adjust computational costs for different input instances. [31] suggests reusing pruned tokens at later stages of the model.

SUMMARY

This disclosure describes an approach to background token detection, but, unlike Focus DETR, the disclosure includes approaches that address the limitations associated edge platforms. Additional information about of these image tokens as foreground (FG) and background (BG), are integrated in a pre-processing stage to filter out unnecessary patches. The disclosure therefore discloses approaches that avoid heavy CNN backbones to detect background tokens in a computationally expensive manner, as proposed in Focus DETR. To summarize, heavy CNN backbones (e.g., ResNet50, ResNet101 [13]) are not suitable for edge devices, and this disclosure proposes approaches to overcome Focus DETR's limitations in this regard.

Unlike Focus DETR, this disclosure proposes a Background Aware Vision Transformer (BAViT) capable of separating FG and BG tokens to help in token pruning. The disclosure introduces a modified Accumulative Cross Entropy Loss function for BG/FG classification. This disclosure also demonstrates, experimentally, that integration of BAViT as a pre-processing block of DETR/YOLOS like object detection model provides a good latency/accuracy trade-off and increased throughput of the model.

Focus DETR is also unsuitable as it requires various modifications to the existing DETR model which require model retraining or finetuning for a long time. Therefore, although the Focus DETR technique produces SOTA results, it is not feasible approach for edge devices, which do not have the computational resources to run the model, and/or are unable to perform the required training or do not have time to implement the required training.

This disclosure proposes a strategy for background token identification using a learnable small ViT model (e.g., using 2 layers). The disclosed approach produces foreground images which visibly look similar to Focus DETR produced foreground images, but the proposed approach uses a very small model, compared to Focus DETR, to achieve this.

The disclosed pre-processing approach can be implemented as a separate module and integrated with other models at the pre-processing data stage, enabling faster performance and making the models suitable for smaller devices.

The target use case is for small ViTs for edge devices, therefore it is difficult to compare it with Focus DETR mAP/latency numbers which uses very large model and performs latency experiments on larger GPUs.

To that end, a method for computer vision on a device includes receiving an input image at a processor of the device and dividing the input image into a plurality of non-overlapping patches, each patch representing an image token. The method includes classifying each image token as either a token classified as foreground or a token classified as background by applying a background-aware vision transformer (BAViT). The BAViT includes a vision transformer having at least two transformer layers without a class (CLS) token and configured to generate an embedding for each image token, and a linear output layer coupled to the vision transformer and configured to receive the embedding for each image token and output a classification score for foreground and background for that image token. During training, the method includes computing an accumulative cross entropy loss function across the image tokens to train the background-aware vision transformer. During inference, the method includes discarding at least a subset of image tokens classified as background by skipping computation for those image tokens in subsequent layers of a computer vision model and processing the image tokens classified as foreground using an object detection transformer model to generate a detection output.

The classifying may include generating training labels for the image tokens using segmentation maps or bounding boxes from annotated datasets.

An image token may be labeled as a token classified as foreground when more than a given percentage of its pixels overlap with a segmentation map of an object, and otherwise labeled as a token classified as background.

The method may further include applying connected component analysis to a map of image tokens classified as foreground and image tokens classified as background to reduce misclassification of image tokens classified as foreground as image tokens classified as background.

The object detection transformer model may include a You Only Look at One Sequence (YOLOS) model, and the background-aware vision transformer may be integrated as a pre-processing module, the integration including upscaling the classifications of image tokens from the resolution of the background-aware vision transformer to the higher resolution expected by the YOLOS model, while preserving relative patch positions.

Discarding tokens classified as background may reduce the total number of tokens processed by the object detection model while maintaining an object detection accuracy that is within an acceptable margin relative to a baseline model without the background-aware vision transformer.

The device may be an edge device having limited computational resources and the classifying may be performed using a vision transformer having only two transformer layers.

Discarding image tokens classified as background may reduce runtime memory usage on the edge device.

The method may reduce inference latency of the object detection model to enable real-time performance on the edge device.

Dividing the input image may produce a set of image tokens, the background-aware vision transformer may classify the image tokens as tokens classified as foreground or tokens classified as background, and subsequent transformer layers may skip tokens classified as background, thereby reducing quadratic complexity.

A device for performing computer vision includes a memory storing instructions and a processor configured to execute the instructions to receive an input image, partition the input image into a plurality of patches corresponding to image tokens, classify each image token as a token classified as foreground or a token classified as background using a background-aware vision transformer (BAViT) having a transformer network without a class token and a linear classifier configured to output foreground/background scores for each image token, identify image tokens classified as background as prunable tokens, discard computation for image tokens classified as background prior to processing the image tokens in an object detection model, and process only the image tokens classified as foreground in a transformer-based object detection model to generate a detection output.

The processor may be further configured to compute an accumulative cross entropy loss across the image tokens during training of the background-aware vision transformer.

The processor may be further configured to apply connected component analysis to a map of tokens classified as foreground and tokens classified as background to correct tokens classified as foreground that were misclassified as tokens classified as background.

The object detection model may be a You Only Look at One Sequence (YOLOS) model, and the background-aware vision transformer may be configured as a pre-processing block for the YOLOS model, the configuration including upscaling the classifications of image tokens from the resolution of the background-aware vision transformer to the higher resolution expected by the YOLOS model, while preserving relative patch positions, and modifying the YOLOS model to skip computation for tokens classified as background and return zero-valued output tokens for those tokens.

The background-aware vision transformer may include two transformer layers and may be configured for deployment on an edge device having limited computational resources.

Discarding tokens classified as background may reduce runtime memory usage and inference latency of the object detection model.

The device may be an edge device including limited memory and processing power.

The background-aware vision transformer may include only two transformer layers to enable deployment on the edge device.

Discarding tokens classified as background may reduce inference latency of the device to support real-time computer vision applications.

The device may be configured to operate in an application selected from the group including a security system, an inventory tracking system, and a surveillance system.

BRIEF DESCRIPTION OF THE DRAWINGS

The foregoing features and advantages, as well as others, will be described in detail in the following description of specific embodiments given by way of illustration and not limitation with reference to the accompanying drawings, in which:

FIG. 1 is a schematic diagram of a system for training machine learning models;
FIG. 2 is a diagram of various images related to token pruning.
FIG. 3A, 3B, 3C each show an image, with the images showing different stages in the tokenization process.
FIGS. 4 and 5 are each block diagrams showing example systems for training machine learning models.
FIGS. 6A, 6B show example experimental results.
FIGS. 7A, 7B show another set of example experimental results.
FIG. 8 shows an example diagram to illustrate example post-processing techniques.

In order to favor the clarity of the features shown, the figures may be drawn in simplified fashion, are not necessarily drawn to scale, and the edges of the figures may not necessarily indicate termination of the extent of the feature.

DETAILED DESCRIPTION

In the figures and in the rest of the description, like features have been designated by like references in the various figures; as such, a corresponding description may not be repeated for the sake of brevity. In particular, the structural and/or functional features that are common amongst the various embodiments may have the same references and may have identical structural, dimensional, and material properties. Finally, the different embodiments and variants are not exclusive to one another and can be combined amongst themselves.

The references used herein are provided merely for convenience and hence do not define the extent of protection or the scope of the embodiments.

In the ensuing description, one or more specific details are illustrated, aimed at providing an in-depth understanding of embodiments of this invention. The embodiments may be implemented without one or more of the specific details, or with other methods, components, materials, etc. In some cases, known structures, materials, or operations may not be illustrated or described in detail so as to not lose focus on the main aspects of embodiments of the invention.

Reference to "an embodiment" or "one embodiment" in the present description should be understood as meaning "at least one embodiment". Moreover, phrases such as "in an embodiment" or "in one embodiment" that may be present in one or more points of the present description do not necessarily refer to one and the same embodiment. Moreover, particular configurations, structures, or characteristics may be combined in any manner known to skilled persons in one or more other embodiments.

Unless indicated otherwise, when reference is made to two elements directly connected together, this signifies direct contact of one element to the other without any intermediate elements. When reference is made to two elements connected or coupled together, this signifies that these two elements can be either directly connected or they can be indirectly connected via one or more other intermediate elements.

Unless specified otherwise, the expressions "about", "around", "approximately", "substantially" and "in the order of" signify within 10 % or 10°, and preferably within 5 % or 5°. Additionally, the phrase "comprised between ... and..." or equivalent signifies that the end points are included, unless otherwise indicated.

Where not otherwise defined, all technical and scientific terms used herein have the same meaning commonly used by skilled persons in the field pertaining to the present invention. The views included in the attached figures and described herein are not intended as representations of structural features, i.e., constructional limitations, but should be interpreted as representations of functional features, i.e., functions that can be implemented in different ways.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures, or to a ... as orientated during use as described in the description, but not limited thereby.

In theory, AI should be accessible and beneficial to various applications in everyday life. Existing solutions, however, have computing, financial, and temporal requirements such that the existing solutions can rarely serve certain situations. For example, existing AI solutions tend to assume large computational power, large financial resources to train models and process inputs with the large, trained models.

The approaches described herein focus on generating models that are capable of being implemented by so-called edge devices. These edge devices are devices that are, compared to large AI providers, computationally restrained. Therefore, implementing large models on these devices is impractical: if they can run the model, they can experience latency, they can encounter frequent interruptions, etc. Described below is an approach to generate models that can more readily be adapted to edge devices, which can be more affordable and scalable to various hardware back-ends.

ViT is also used in object detection by models like DETR [21], which uses learnable queries and encoder features to produce box predictions using decoder. Different variations of DETR-like models like [19] [18], [11] are proposed to create state of the art object detection models. Zheng et.al [7] showed that the complexity of Deformable DETR [36] is 8.8x compared to the decoder.

In this disclosure, approaches are provided to reduce the number of input tokens by introducing a novel token importance criteria for pruning with a minimal impact on performance.

In one example embodiment, for example, the disclosed approach uses a segmentation masks present in the COCO (80 object categories) [17] and PASCAL VOC (20 object categories) [10] datasets to annotate each individual patch as foreground (FG) or background (BG), serving as a guide for ViT models in object detection tasks to determine the importance of each token.

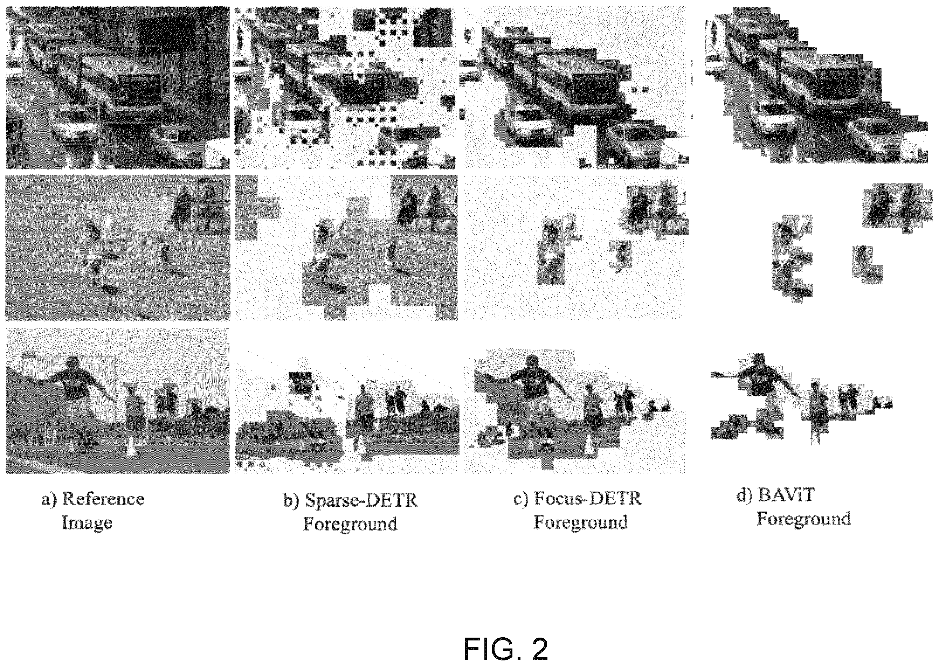

In comparison to Sparse DETR [6] and Focus DETR [7], two impressive and state of the art techniques in token pruning, the proposed approaches perform relatively well, as show in FIG. 2. Sparse DETR uses the token important score by computing cross-attention map in the decoder resulting in 70% of token pruning. Focus DETR [7] on the other hand detects background tokens and prunes them to increase the throughput.

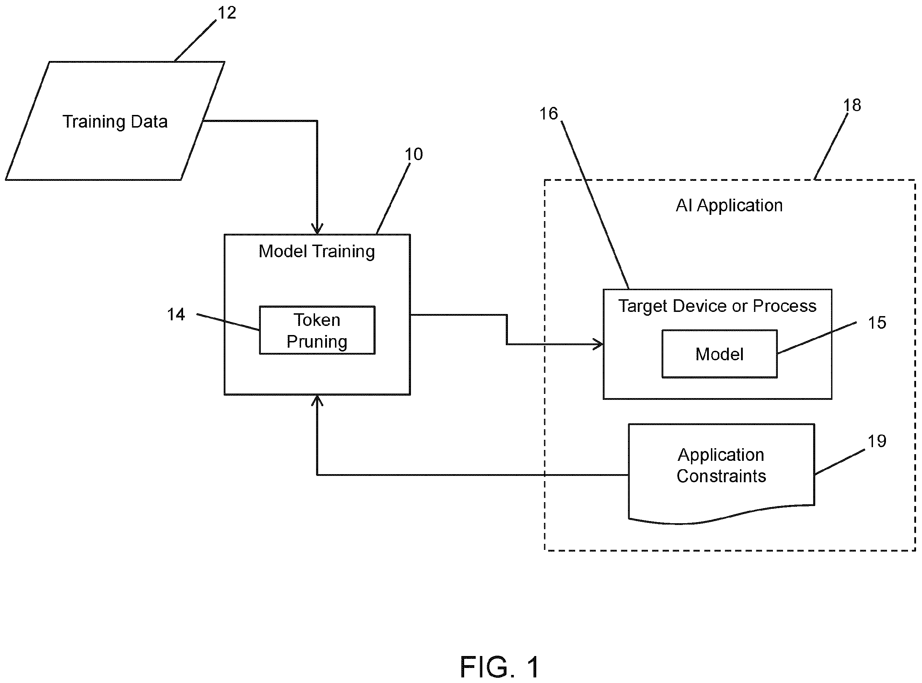

Turning now to the figures, FIG. 1 illustrates a model training engine 10 which is configured, as described below, to take an initial model or training data 12 and generate or otherwise determine an edge complaint model 15 via the token pruning module 14. The model 15 can be used by or deployed upon a target device or process 16, the "target 16" for brevity. The target 16 is used in or purposed for an AI application 18 that uses the model 15, such as a security system that relies on computer vision, or an inventor tracking system that relies on computer vision, etc. The AI application 18 has one or more application constraints 19 that dictate how the optimized DNN 14 is generated or chosen.

The following provides an example methodology according to the approaches disclosed herein for the token pruning module 14.

3 Methodology

3.1 Auxiliary Annotations

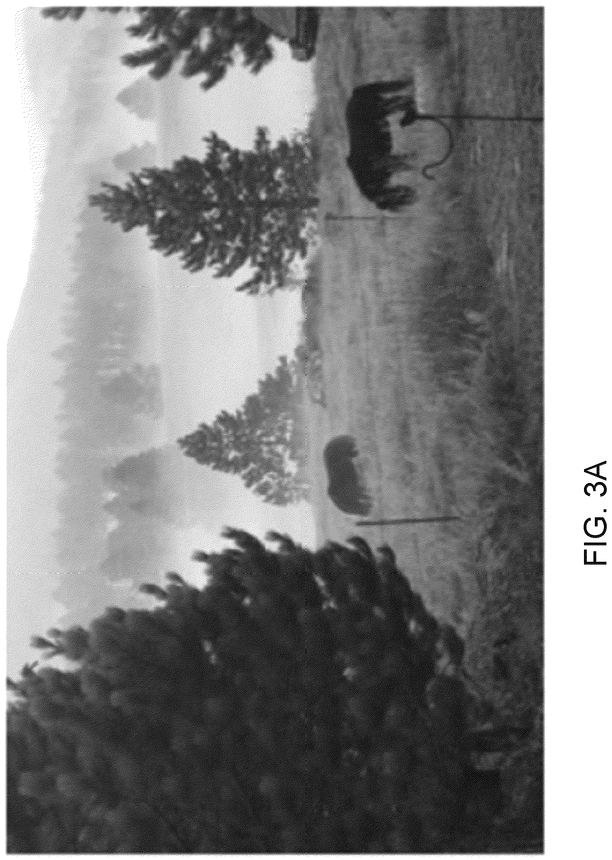

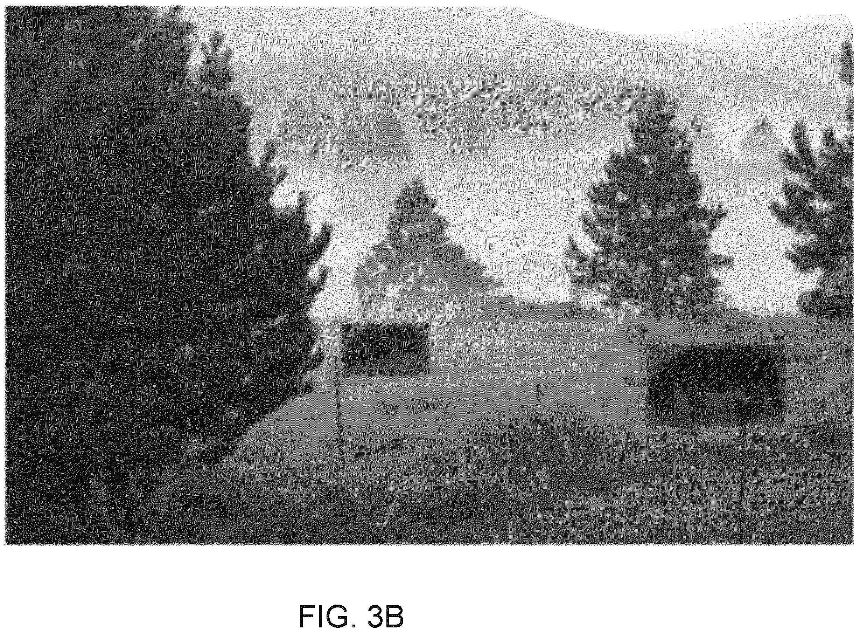

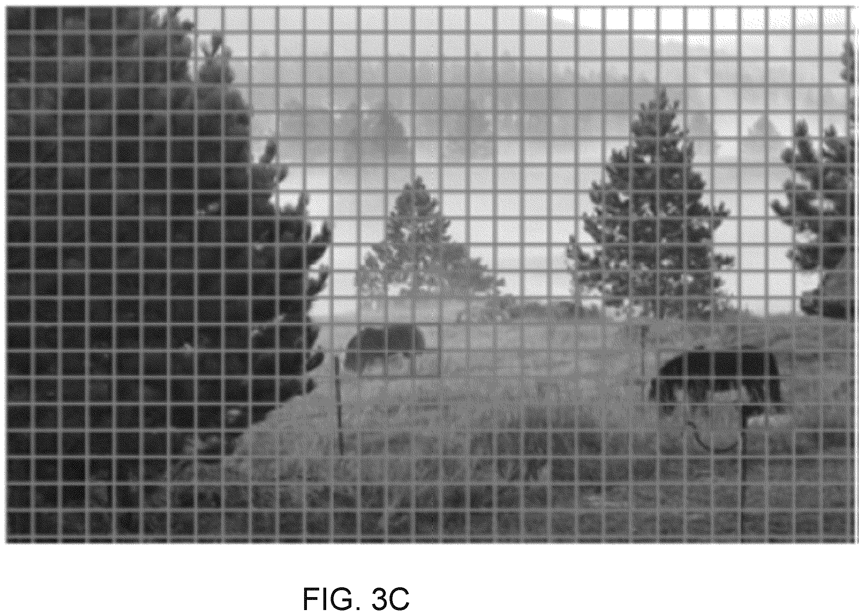

Transformers accept image patches (called tokens) of size (k × k), created by dividing the input image into a sequence of square patches, as shown in FIGS. 3A, 3B, and 3C. FIG. 3A shows the original image, FIG. 3B shows a foreground object area in transparency, and FIG. 3C shows a16 × 16 grid with red grids bring foreground and gray being background.

ViTs use these patches to classify objects in the image through the attention mechanism. Popular datasets like Microsoft COCO [17] and Pascal VOC [10], used for object detection and segmentation tasks, contain annotations such as bounding boxes and instance segmentation maps.

In at least some example embodiments, the token pruning module 14 creates a M-dimensional patch annotation vector for every input image, where M represents the total number of tokens formed by dividing the input image into k × k smaller non-overlapping patches as shown in FIGS. 3A, 3B, and 3C.

The token pruning module 14 can compare the Jaccard similarity coefficient [25] of each token with all the bounding boxes or segmentation map and it is labeled as one (Foreground - FG) if the overlap is more than 0.5, otherwise it is labeled as zero (Background - BG) as shown in Equation 1 and Equation 2 (below). FIGS. 3A, 3B, and 3C shows a sample Pascal VOC image (left), bounding boxes (center), and image patches with BG patches in gray and FG patches in red color. When using segmentation maps to create the annotation vector, any image patch with more than 10% overlapping pixel with any class of segmentation map is considered foreground; otherwise, it is considered background.

The token pruning module 14 (e.g., a trained BAViT model) can be trained both using bounding box annotations and segmentation maps but most of the results presented in this disclosure are from annotated data using segmentation map.

$$L_i = \begin{cases} 1 \; \{if \; J(P_i, B_j) \geq \tau \\ 0 \; \{if \; J(P_i, B_j) < \tau \end{cases} \quad (1)$$

$$J(P_i, B_j) = \frac{|P_i \cap B_j|}{|P_i \cup B_j|} \quad (2)$$

where P is patch and B is bounding box, Li is assigned label for ith token, $J(P_i,B_j)$ is Jaccard coefficient, $\tau$ is threshold for selecting the token as foreground or background

3.2 BAViT Architecture

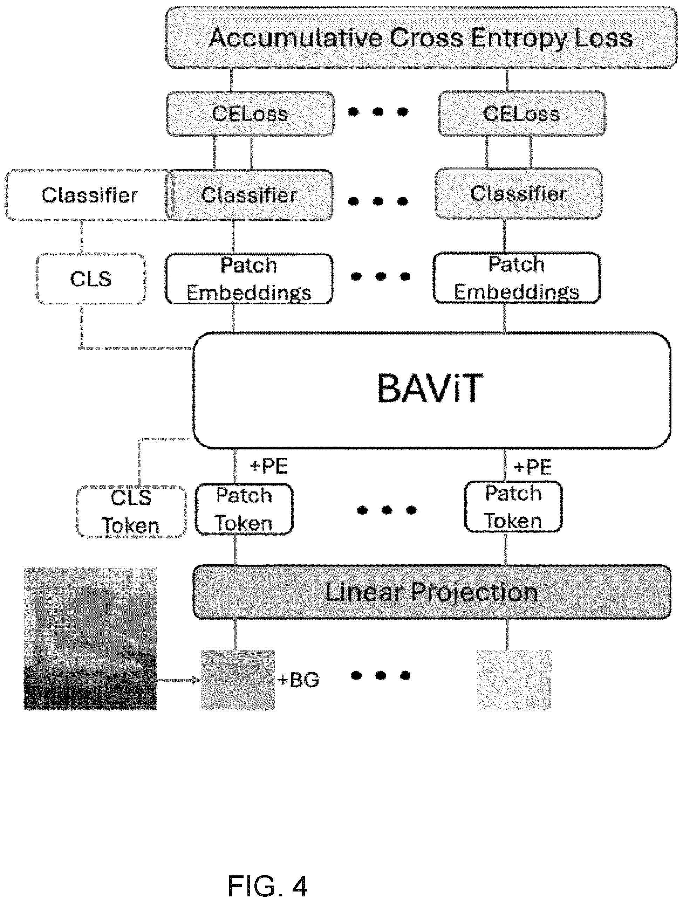

A token pruning module 14 architecture (e.g., a BAViT) can created by introducing few fundamental changes in the traditional ViT architecture as illustrated in Figure 4. The CLS token is removed and a linear layer with two output classes is introduced for each token. Traditional ViT uses CLS token to encapsulate knowledge from all tokens to provide the score for each class for one image. On the contrary, the disclosed token pruning module 14 architecture (e.g., a BAViT) calculates classification score for FG and BG classes for each token. Therefore, the token pruning module 14 architecture (e.g., a BAViT) does not need a CLS token.

Accumulative Cross Entropy Loss (Lacc) is calculated as defined in Equation 3 (see below), and weights are updated via back propagation. This loss function can also be used with other loss functions targeting different vision tasks, such as object detection loss to help the model focus on important tokens. Since token pruning module 14 architecture (e.g., a BAViT) can be used as pre-processing step for traditional token pruning, the token pruning module 14 architecture (e.g., a BAViT) is light weight and trained with only 2 layers (BAViT-small). This disclosure contemplates various configurations of the token pruning module 14 architecture (e.g., a BAViT), including architectures with 10 layers (with experimental results of this larger configuration are shown as (BAViT-large) in result section.

3.3 Accumulative Cross Entropy Loss

In contrast to the traditional ViT classifier training, which involves introducing an additional classification token (CLS) and calculating loss only for that token, token pruning module 14 architecture (e.g., a BAViT ) proposes a new loss function that calculates the Cross Entropy Loss [20] for each token individually and then aggregates these losses. This aggregated loss is termed as Accumulative Cross Entropy Loss (Lacc), as defined in 3.

$$L_{acc} = -\frac{1}{N \times M} \sum_{i=1}^{N} \sum_{j=1}^{M} \sum_{c=1}^{C} y_{i,j,c} \log(\hat{y}_{i,j,c}) \qquad (3)$$

where N is the the number of image samples, M is the number of tokens per sample, C is the number of classes (background and foreground). yi,j,c is the variable indicating whether the j-th token in the i-th sample belongs to class c. It's value is one if the token belongs to class c, otherwise it is zero. y^i,j,c is the predicted probability of the j-th token in the i-th sample being in class c.

3.4 Model Training

The token pruning module 14 architecture (e.g., a BAViT ) can be trained with a variety of approaches. For example, the experimental results shown herein are based on training the token pruning module 14 architecture (e.g., a BAViT) with both Pascal VOC [10] and COCO 2017 [17], and reports mAP (mean Average Precision) result on the validation dataset for both. Each training batch, denoted as (B, M, S), consists of M tokens of size $16 \times 16$, each with an embedding size of S = 768, and labels for each token indicating either BG or FG. Various training approaches are contemplated for optimization. In the experiments, the Adam [16] optimizer was used with a step learning rate scheduler and trained the models for 100 epochs until convergence. The initial weights for the ViT [23] model were loaded from ImageNet-1k [8] dataset pre-trained model.

3.5 BAViT Integration with ViT based Detection

To provide an example embodiment of the token pruning module 14 architecture (e.g., a BAViT), FIG. 4 shows an example embodiment where the token pruning module 14 architecture was added as a pre-processing block of the ViT based object detector. YOLOS [11] was used as the object detection model, an architecture similar to DETR [21] with an exception that YOLOS provides an option to use the detector without a CNN backbone.

As the token pruning module 14 architecture (e.g., a BAViT) works directly on image tokens, it cannot be applied to a CNN backbone based ViT object detectors. The example BAViT model works on $384 \times 384$ input and YOLOS (tiny) expects $512 \times 512$ inputs to achieve the benchmark mAP. BAViT outputs the classification of each token as BG or FG with a total of 576 tokens but the YOLOS model expects 1024 tokens so the example includes upscaling the tokens labels from 576 to 1024 keeping the relative BG/FG patch position same. After the label scaling step, each of 1024 token is classified as BG or FG token. The YOLOS model only computes the FG tokens from first to the final layer.

The YOLOS model was also modified slightly so that it does not compute anything for the BG tokens and return zeros as the final output token for these tokens. All the FG tokens are processed in the usual manner. So, the modified BAViT + YOLOS-tiny model contains 14 layers, first 2 layers of BAViT and the 12 layers of YOLOS-tiny.

4 Results

4.1 BG/FG Classification Model

The BAViT model was trained with both 2 layers (BAViT-small) and 10 layers (BAViT-large) depth.
Table 1 displays the token classification accuracy of these models on different datasets.

Table 1: Accuracy of FG/BG classification on different models trained on different datasets and with different number of layers.

| Model | Depth | Dataset | Accuracy(%) |
|---|---|---|---|
| BAViT-small | 2 | Pascal-VOC | 75.93 |
| BAViT-large | 10 | Pascal-VOC | 88.79 |
| BAViT-small | 2 | MS-COCO | 70.88 |
| BAViT-large | 10 | MS-COCO | 80.57 |
| [0093] BAViT-small was used for integration with object detection model (YOLOS) but the BAViT-large model was also trained to assess the impact on model accuracy. | | | |

BAViT-small achieved 75.93% accuracy, which was reasonable compared to BAViT-large's 88.79% accuracy for the BG/FG classification task on VOC dataset given the difference in number of parameters for these two models. Both models were also trained on COCO dataset as shown in Table 1 and used BAViT-small trained with COCO with mAP 70.88%. In YOLOS-tiny model, there are 6.5 million parameters with count of FLOPS as 18.8 GFLOPS. The addition of BAViT-small over the native YOLOS-tiny marginally increases the total number of parameters (+1.49M) and FLOP counts (+1.961 GFLOPS) but substantially reduced the amount of total number of tokens (25.63%) which has the quadratic impact over the computational complexity of the ViT models.

These results suggest that this approach can be applied to different datasets with configurable number of layers based on latency and RAM constraints.

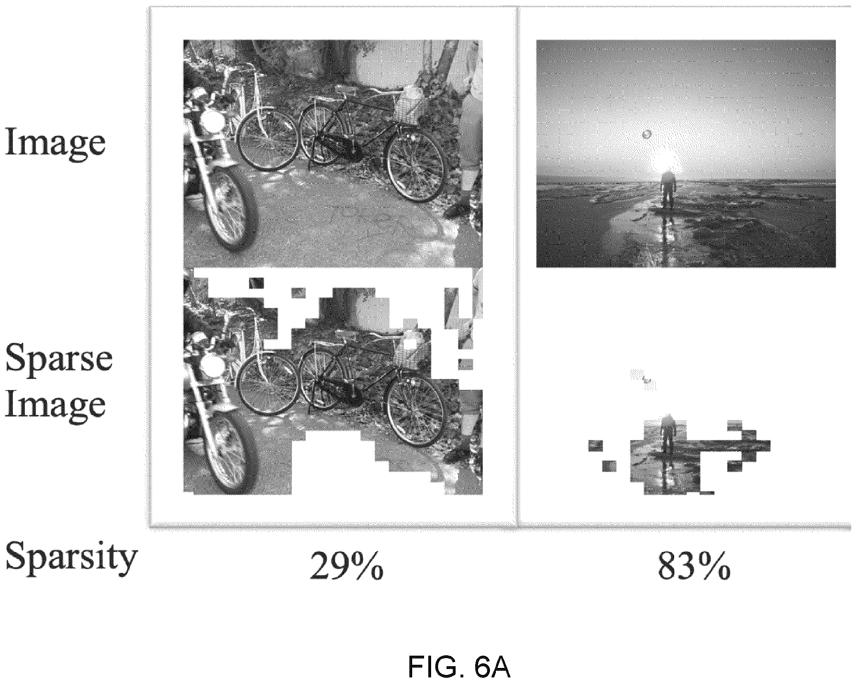

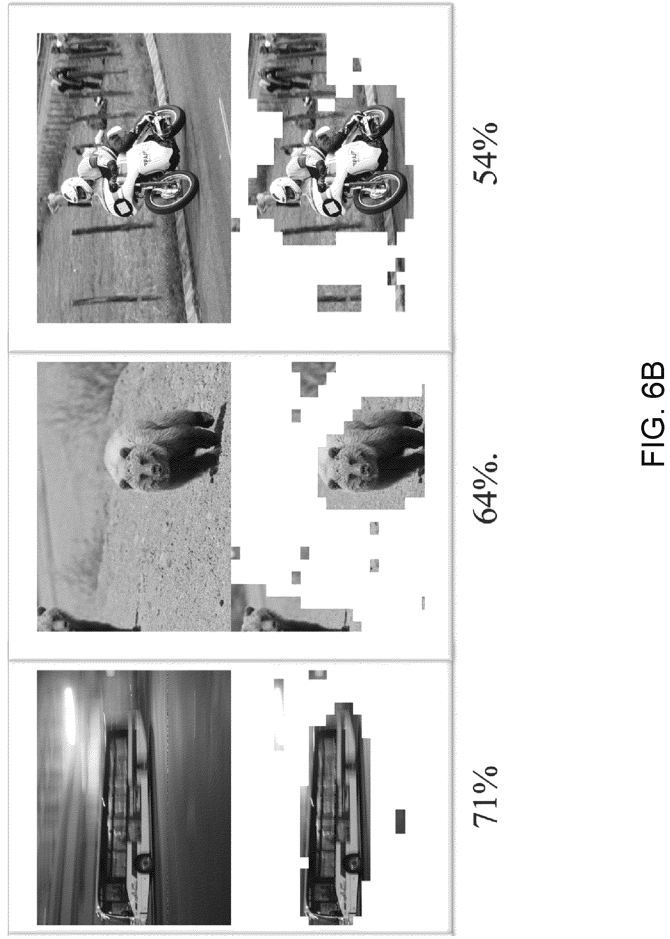

FIGS. 6A, 6B show the BAViT-large model output for COCO images where the top row image is the original image and the bottom row image is sparse image with all background patches shown in white color. There are few misclassified tokens where background is classified as foreground and vice versa.

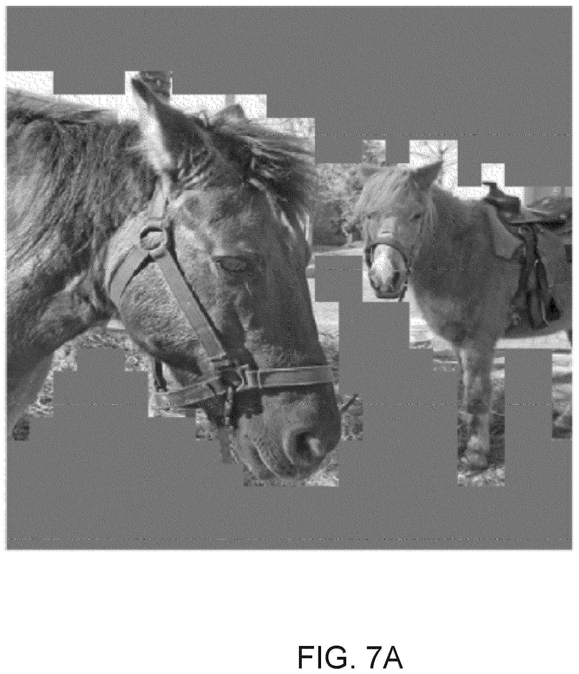

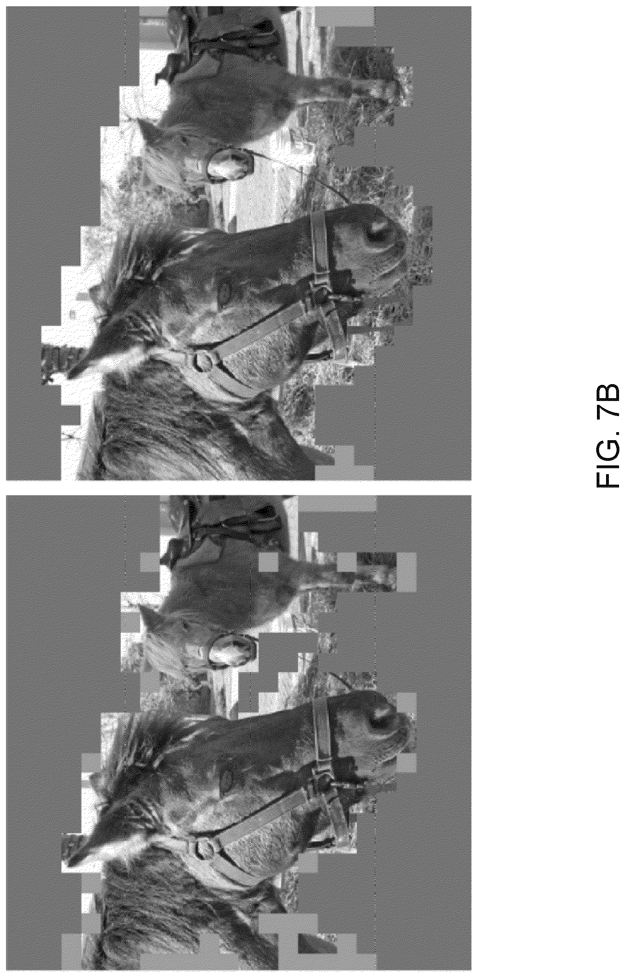

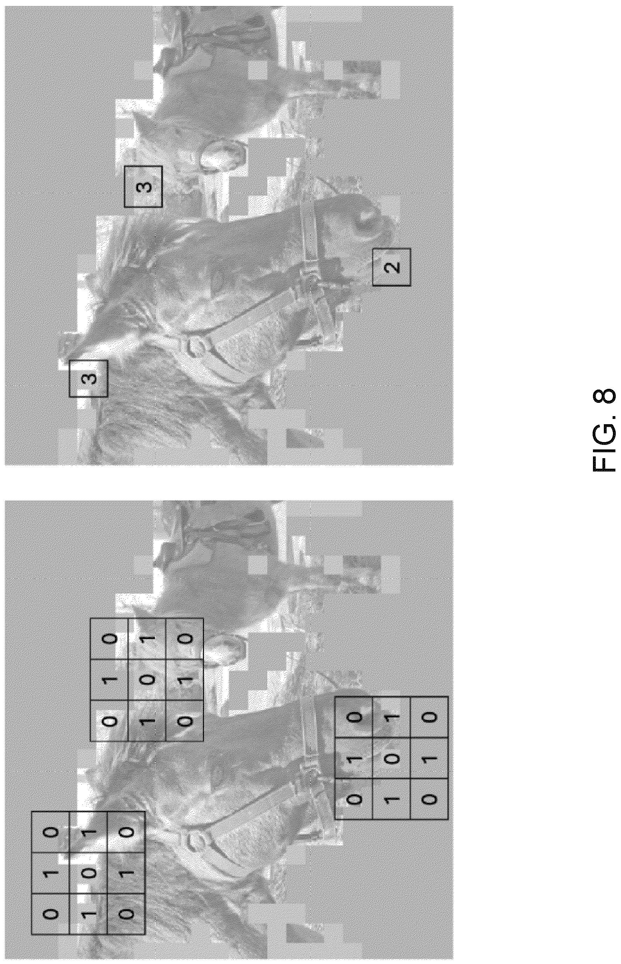

The foreground being classified as background can be concerning. To address these aspects, additional post processing block(s) can be added to improve the classification accuracy. FIGS. 7A, 7B show the result of BAViT where orange patches are FG misclassified as BG and gray patches are correctly classified by the model. To minimize the error due to misclassified FG pixels, a Connected Component Analysis (CCA) [14] may be used, the traditional graph analysis algorithm to connect nodes with connected neighbors. In this case, each patch is considered as a node of the graph and CCA is performed by applying a convolutional kernel (shown in FIG. 8) on the graph (FG=1, BG=0) and converting the graph node from 0 to 1 for all pixels with convolution output greater than 2. The CCA algorithm is applied for few steps to minimize the classification error. More steps reduces classification error but it increases number of FG patches which were BG in the ground truth image. Some approaches can include limiting the amount of steps to three (3) steps, which may be optimal based on different experiments, and the impact on accuracy and efficiency. The right image in FIG. 8 shows the result of post processing convolution, which brings the result very close to the ground truth. Note that post processing has not been applied in the other reported experimental results, and including the post processing convolution is expected to improve accuracy of the disclosed model(s) significantly.

From the experimental results, it is evident that the token pruning module 14 architecture (e.g., a BAViT) may be able to separate FG/BG patches effectively even with multiple objects from different classes. It is also clear from these images that in many images more than 70% of patches are background images. On an average COCO images have 40% of patches are background.

4.2 Token reduction using BAViT

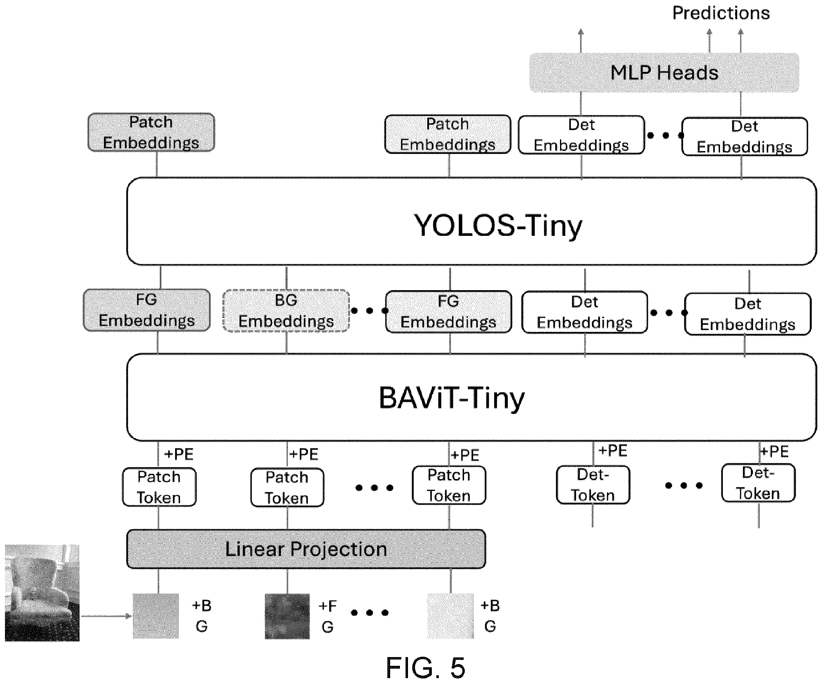

As explained in section 3.5, in FIG. 5, a token pruning module 14 architecture (e.g., a BAViT-tiny) was added to pre-process the image and classify each patch as FG or BG tokens before passing to YOLOS model. Using FG patches for all computation and ignoring all the BG patches, the number of tokens in YOLOS-tiny model can be reduced drastically. Equation 4 (below) shows the calculation used to calculate the average reduction in tokens for 5000 COCO validation images. Table 2 shows BAViT model used with different level of sparsity for token pruning and the impact on mAP due to the same. The sparsity is controlled by modifying the confidence threshold of background tokens.

The disclosed token pruning module 14 architecture (e.g., a BAViT) model adds extra complexity to the overall model but since this model has very low complexity and it works at much lower resolution, the overall number of token is less than the original model. For example, the model with 34% sparsity reduces total tokens by 24% with an accuracy drop of 2.6% on COCO dataset. Note that the experimental results do not demonstrate the results of fine-tuning for most of these models. However, one model has been fine-tuned with 35% sparsity and could improve the accuracy by 2 mAP points. The fine-tuned model was only for 30 epochs to improve the accuracy.

Although approaches including the token pruning module 14 architecture (e.g., a BAViT) may suffer a drop in mAP due to sparsification, it is still applicable to edge use cases whereas solution proposed in methods like Sparse DETR [6] and Focus DETR [7] can't be used. Focus DETR, being the SOTA in token pruning field, uses ResNet50 and ResNet101 backbones to detect background tokens, which makes in impractical to be used on edge devices with very limited memory and computational capabilities. Also, Focus DETR proposes significant changes in the model architecture which necessitates the model to be retrained which is very expensive. The disclosed token pruning module 14 architecture (e.g., a BAViT), on the other hand does not need model retraining, whereas to compensate the drop in mAP due to sparsification, it can be finetuned for lesser number epochs (30 epochs is used for experiments).

$$Token\ Reduction = \sum_{i=1}^{n} \frac{Ty_i - (Tb_i + Ty_i \cdot s)}{N} \quad (4)$$

where $Ty_i$ is ith total YOLOS tokens for ith image, $Tb_i$ is ith total BAViT tokens, s is sparsity percentage in ith image and N is total number of images.

Table 2: Token reduction using BAViT as a pre-processing block to YOLOS-tiny model. Total number of tokens for 2 layers of BAViT is 1152 (576 tokens per layer for 384 × 384 input ) and total number of tokens for 12 layers of BAViT is 12288 (1024 tokens per layer for 512 × 512 input) . BAViT+YOLOS-F is the fine-tuned YOLOS model using only Foreground tokens (30 epochs)

| Model | Sparsity %age | mAP (COCO) | YOLOS | BAViT | YOLOS Pruned | YOLOS +BAViT | %Reduction | |
|---|---|---|---|---|---|---|---|---|
| BAViT +YOLOS | 46% | 20.00 | 1152 | 12288 | 6635 | 7787 | 36.63% | |
| BAViT +YOLOS | 43% | 21.50 | 1152 | 12288 | 7004 | 8156 | 33.63% | |
| BAViT +YOLOS | 40% | 22.50 | 1152 | 12288 | 7372 | 8524 | 30.63% | |
| BAViT +YOLOS | 39% | 22.70 | 1152 | 12288 | 7495 | 8647 | 29.63% | |
| BAViT +YOLOS | 37% | 23.80 | 1152 | 12288 | 7741 | 8893 | 27.63% | |
| BAViT +YOLOS | 35% | 24.40 | 1152 | 12288 | 7987 | 9139 | 25.63% | |
| BAViT +YOLOS-F | 35% | 26.60 | 1152 | 12288 | 7987 | 9139 | 25.63% | |
| BAViT +YOLOS | 32% | 25.00 | 1152 | 12288 | 8355 | 9507 | 22.60% | |
| BAViT +YOLOS | 29% | 25.90 | 1152 | 12288 | 8724 | 9876 | 19.60% | |
| BAViT +YOLOS | 5% | 27.70 | 1152 | 12288 | 11673 | 12825 | -4.37% | |
| BAViT +YOLOS | 2% | 28.60 | 1152 | 12288 | 12042 | 13194 | -7.38% | |
| BAViT +YOLOS | 0% | 28.80 | 1152 | 12288 | 12288 | 13440 | -9.40% | |

5 Conclusion

In this work, a novel method was introduced for separating BG/FG patches in images by leveraging existing annotations from bounding boxes and segmentation maps to create localized annotations. These annotations were applied within a token classification training strategy, achieving an accuracy of up to 88.79% on the Pascal VOC dataset and 80.57% on the COCO dataset using a 10-layer transformer model. Notably, even with just 2 transformer layers, over 75% accuracy on Pascal VOC and 70% on COCO dataset respectively was achieved. The BAViT-small model was used for pre-processing step to prune tokens of a YOLOS-tiny model. The disclosed approach could reduce the number of tokens by 25% with a mAP drop of 3% on COCO dataset. This drop is shown to be recovered (less than 2% mAP drop) by sparse token finetuning by using just 30 epochs. BAViT approach is a low cost and low complexity alternative to SOTA methods like Focus DETR [7] which works on large models not fitting on edge devices. Future work involves integrating tje approach to YOLOS type of model to jointly train BG/FG classifier and object detector together to observe the accuracy-latency trade-off. Additionally, one can aim to achieve adaptive sparsity based on input image complexity, with a learnable threshold parameter similar to [28].

For simplicity and clarity of illustration, where considered appropriate, reference numerals may be repeated among the figures to indicate corresponding or analogous elements. In addition, numerous specific details are set forth in order to provide a thorough understanding of the examples described herein. However, it will be understood by those of ordinary skill in the art that the examples described herein may be practiced without these specific details. In other instances, well-known methods, procedures and components have not been described in detail so as not to obscure the examples described herein. Also, the description is not to be considered as limiting the scope of the examples described herein.

It will be appreciated that the examples and corresponding diagrams used herein are for illustrative purposes only. Different configurations and terminology can be used without departing from the principles expressed herein. For instance, components and modules can be added, deleted, modified, or arranged with differing connections without departing from these principles.

It will also be appreciated that any module or component exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the engine 10, any component of or related to the engine, etc., or accessible or connectable thereto. Any application or module herein described may be implemented using computer readable/executable instructions that may be stored or otherwise held by such computer readable media.

The steps or operations in the flow charts and diagrams described herein are just for example. There may be many variations to these steps or operations without departing from the principles discussed above. For instance, the steps may be performed in a differing order, or steps may be added, deleted, or modified.

Note that the subject matter of the present disclosure is directed to specific improvements in machine learning models for computer vision that address known limitations of transformer-based architectures when implemented on devices with constrained computational resources. The disclosed systems and methods are not abstract ideas because they are rooted in technology and produce a technical improvement in the functioning of computer systems.

The disclosed processes, including dividing an image into hundreds of tokens, performing token-wise foreground/background classification using a background-aware vision transformer (BAViT) without a CLS token, applying an accumulative cross entropy loss over large training datasets, pruning background tokens, and integrating the results with a downstream YOLOS object detection pipeline, cannot be performed by the human mind. These operations require intensive matrix multiplications and probabilistic computations across high-dimensional data at speeds and scales that are only achievable using processors and memory. A human could neither classify tokens across a $384 \times 384$ image in real time nor compute accumulative loss functions across thousands of tokens and millions of samples within any practical timeframe.

The disclosed techniques have a concrete connection to real-world technology. By pruning background tokens before transformer-based detection, runtime memory usage and inference latency are reduced, enabling real-time performance on edge devices such as cameras, security systems, or inventory tracking systems. This is not a mental exercise or mere data manipulation; it is a modification to how computing devices operate when running vision models.

In addition, the disclosed approaches improve the functioning of computer technology itself. Traditional vision transformers suffer from quadratic growth in computation as token count increases, leading to impractical deployment on resource-constrained platforms. The disclosed background-aware pruning alters the operation of the computer by reducing the number of tokens propagated through subsequent layers, thereby reducing FLOPs, memory consumption, and processing time. As a result, devices can perform object detection tasks that would otherwise be impossible within their computational limits.

While this invention has been described with reference to illustrative embodiments, this description is not intended to be construed in a limiting manner. Various modifications and combinations of the illustrative embodiments, as well as other embodiments of the invention, will be apparent to skilled persons in the field of the invention upon reference to the description and the figures. It is therefore intended that the appended claims encompass any such modifications or embodiments.

Finally, the practical implementation of the embodiments and variants described herein is within the capabilities of those skilled in the art based on the functional description provided hereinabove while falling within the scope of the invention as defined in the attached claims.

Listing of references cited herein and incorporated by reference: [1] A Dosovitskiy, L Beyer, A.K.: An image is worth 16x16 words: Transformers for image recognition at scale, arXiv preprint arXiv:2010.11929v2 (2021); [2] A Vaswani, N Shazeer, N.P.: Attention is all you need. arXiv preprint arXiv:1706.03762 (2017); [3] Aishwarya Bhandare, Vamsi Sripathi, D.K.: Efficient 8-bit quantization of transformer neu- ral machine language translation model, arXiv preprint arXiv:1906.00532 (2019); [4] Angela Fan, Edouard Grave, A.J.: Reducing transformer depth on demand with structured dropout, arXiv preprint arXiv:1909.11556 (2019); [5] Angela Fan, Pierre Stock, B.G.: Training with quantization noise for extreme model com pression, arXiv preprint arXiv:2004.07320 (2020); [6] Byungseok Roh, JaeWoong Shin, W.S.: Sparse detr: Efficient end-to-end object detection with learnable sparsity, arXiv preprint arXiv:2111.14330 (2021); [7] Dehua Zheng, Wenhui Dong, H.H.: Less is more: Focus attention for efficient detr, arXiv preprint arXiv:2307.12612 (2023); [8] Deng, J., Socher, R., Fei-Fei, L., Dong, W., Li, K., Li, L.J.: Imagenet: A large-scale hierarchical image database. In: 2009 IEEE Conference on Computer Vision and Pattern Recognition(CVPR), vol. 00, pp. 248-255 (06 2009), https://doi.org/ 10.1109/CVPR.2009.5206848, https://ieeexplore.ieee.org/abstract/document/5206848/; [9] Elena Voita, David Talbot, F.M.: Analyzing multi-head self-attention: Specialized heads do the heavy lifting, the rest can be pruned, arXiv preprint arXiv:1905.09418 (2019); [10] Everingham, M., Van Gool, L., Williams, C.K.I., Winn, J., Zisserman, A.: The PASCAL Visual Object Classes Challenge 2012 (VOC2012) Results (2012), http://www.pascal-network.org/challenges/VOC/voc2012/ workshop/index.html; [11] Fang, Y., Liao, B., Wang, X., Fang: You only look at one sequence: Rethinking transformer in vision through object detection, Advances in Neural Information Processing Systems 34, 26183-26197 (2021); [12] Hans Thisanke, Chamli Deshan, K.C.: Semantic segmentation using vision transformers: A survey, arXiv preprint ar- Xiv:2305.03273 (2023); [13] He, K., Zhang, X., Ren, S., Sun, J.: Deep residual learning for image recognition, In: Proceedings of the IEEE conference on computer vision and pattern recognition, pp. 770-778 (2016); [14] He, L., Ren, X., Gao, Q., Zhao, X., Yao, B., Chao, Y.: The connected-component labeling problem: A review of state-of-the-art algorithms, Pattern Recognition 70, 25-43 (2017); [15] J Devlin, M Chang, K.L.: Bert: Pre-training of deep bidirectional transformers for language understanding, arXiv preprint arXiv:1810.04805 (2018); [16] Kingma, D.P., Ba, J.: Adam: A method for stochastic optimization (2017), https://arxiv. org/abs/1412.6980; [17] Lin, T.Y., Maire, M., Belongie, S., Bourdev, L., Girshick, R., Hays, J., Perona, P., Ramanan, D., Zitnick, C.L., Dollar, P.: Microsoft coco: Common objects in context (2014), http:// arxiv.org/abs/1405.0312, cite arxiv:1405.0312; [18] Liu, F., Wei, H., Zhao: Wb-detr: Transformer-based detector without backbone. In: 2021 IEEE/CVF International Conference on Computer Vision (ICCV), pp. 2959-2967 (2021). https://doi.org/10.1109/ICCV48922.2021.00297; [19] Lv, W., Xu, S., Zhao, Y., Wang, G., Wei, J., Cui, C., Du, Y., Dang, Q., Liu, Y.: Detrs beat yolos on real-time object detection, arXiv preprint arXiv:2304.08069 (2023); [20] Mao, A., Mohri, M., Zhong, Y.: Cross-entropy loss functions: Theoretical analysis and applications (2023), https://arxiv.org/abs/2304.07288; [21] Nicolas Carion, Francisco Massa, G.S.: End-to-end object detection with transformers, arXiv preprint arXiv:2005.12872 (2023); [22] Nikita Kitaev, Lukasz Kaiser, A.L.: Reformer: The efficient transformer, arXiv preprint arXiv:2001.04451 (2020); [23] Research, G.: Vision transformer, https://github.com/google-research/vision_transformer/ (2023); [24] Rewon Child, Scott Gray, A.R.: Generating long sequences with sparse transformers, arXiv preprint arXiv:1904.10509 (2019); [25] Rezatofighi, H., Tsoi, N., Gwak, J., Sadeghian, A., Reid, I., Savarese, S.: Generalized intersection over union: A metric and a loss for bounding box regression (2019), https://arxiv.org/abs/1902.09630; [26] ShengShen, ZhenDong, J.: Q-bert: Hessian based ultra low precision quantization of bert, arXiv preprint arXiv:1909.05840 (2019); [27] Terven, J., Cordova-Esparza, D.: A comprehensive review of yolo: From yolov1 and beyond, arXiv preprint arXiv:2304.00501 (2023); [28] Xiangcheng Liu, Tianyi Wu, G.G.: Adaptive sparse vit: Towards learnable adaptive token pruning by fully exploiting self-attention, arXiv preprint arXiv:2209.13802 (2022); [29] Y Liu, M Ott, N.G.: Roberta: A robustly optimized bert pretraining approach, arXiv preprint arXiv:1907.11692 (2019); [30] Yi Tay, Dara Bahri, L.Y.: Sparse sinkhorn attention, arXiv preprint arXiv:2002.11296 (2020); [31] Yifei Liu, Mathias Gehrig, N.M.: Revisiting token pruning for object detection and instance segmentation, arXiv preprint arXiv:2306.07050 (2023); [32] Yongming Rao, Zuyan Liu,W.Z.: Dynamic spatial sparsification for efficient vision transformers and convolutional neural networks, arXiv preprint arXiv:2207.01580 (2022); [33] Yufei Xu, Jing Zhang, Q.Z.: Vitpose: Simple vision transformer baselines for human pose estimation, arXiv preprint arXiv:2204.12484 (2022); [34] Zaheer, M., Guruganesh, G., Dubey, K.A., Ainslie, J., Alberti, C., Ontanon, S., Pham, P., Ravula, A., Wang, Q., Yang, L., Ahmed, A.: Big bird: Transformers for longer sequences. In: Larochelle, H., Ranzato, M., Hadsell, R., Balcan, M., Lin, H. (eds.) Advances in Neural Information Processing Systems. vol. 33, pp. 17283-17297. Curran Associates, Inc. (2020), https://proceedings.neurips.cc/paper_files/paper/2020/file/c8512d142a2d849725 f31a9a7a 361ab9-Paper.pdf; [35] Ze Liu, Yutong Lin, Y.C.: Swin transformer: Hierarchical vision transformer using shifted windows, arXiv preprint arXiv:2103.14030 (2021); [36] Zhu, X., Su, W., Lu, L., Li, B., Wang, X., Dai, J.: Deformable detr: Deformable transformers for end-to-end object detection, arXiv preprint arXiv:2010.04159 (2020); and [37] Zihang Jiang, Qibin Hou, L.Y.: All tokens matter: Token labeling for training better vision transformers, arXiv preprint arXiv:2104.10858 (2021).

## Claims

1. A method for computer vision on a device, the method comprising:

   receiving an input image at a processor of the device;
   dividing the input image into a plurality of non-overlapping patches, each patch representing an image token;
   classifying each image token as either a token classified as foreground or a token classified as background by applying a background-aware vision transformer (BAViT), the BAViT comprising:

   a vision transformer having at least two transformer layers without a class (CLS) token and configured to generate an embedding for each image token; and
   a linear output layer coupled to the vision transformer and configured to receive the embedding for each image token and output a classification score for foreground and background for that image token;

   during training, computing an accumulative cross entropy loss function across the image tokens to train the background-aware vision transformer;
   during inference, discarding at least a subset of image tokens classified as background by skipping computation for those image tokens in subsequent layers of a computer vision model; and
   processing the image tokens classified as foreground using an object detection transformer model to generate a detection output.

2. The method of claim 1, wherein the classifying comprises generating training labels for the image tokens using segmentation maps or bounding boxes from annotated datasets.

3. The method of claim 1 or 2, wherein an image token is labeled as a token classified as foreground when more than a given percentage of its pixels overlap with a segmentation map of an object, and otherwise labeled as a token classified as background.

4. The method of any one of claims 1 to 3, further comprising applying connected component analysis to a map of image tokens classified as foreground and image tokens classified as background to reduce misclassification of image tokens classified as foreground as image tokens classified as background.

5. The method of any one of claims 1 to 4, wherein the object detection transformer model comprises a You Only Look at One Sequence (YOLOS) model, and the background-aware vision transformer is integrated as a pre-processing module, the integration including upscaling the classifications of image tokens from the resolution of the background-aware vision transformer to the higher resolution expected by the YOLOS model, while preserving relative patch positions.

6. The method of any one of claims 1 to 5, wherein discarding tokens classified as background reduces the total number of tokens processed by the object detection model while maintaining an object detection accuracy that is within an acceptable margin relative to a baseline model without the background-aware vision transformer.

7. The method of any one of claims 1 to 6, wherein the device is an edge device having limited computational resources and the classifying is performed using a vision transformer having only two transformer layers.

8. The method of claim 7, wherein discarding image tokens classified as background reduces runtime memory usage on the edge device.

9. The method of claim 7, wherein the method reduces inference latency of the object detection model to enable real-time performance on the edge device.

10. The method of any one of claims 1 to 9, wherein dividing the input image produces a set of image tokens, the background-aware vision transformer classifies the image tokens as tokens classified as foreground or tokens classified as background, and subsequent transformer layers skip tokens classified as background, thereby reducing quadratic complexity.

11. A device for performing computer vision, comprising:

   a memory storing instructions; and
   a processor configured to execute the instructions to:

      receive an input image;
      partition the input image into a plurality of patches corresponding to image tokens;
      classify each image token as a token classified as foreground or a token classified as background using a background-aware vision transformer (BAViT) having a transformer network without a class token and a linear classifier configured to output foreground/background scores for each image token;
      identify image tokens classified as background as prunable tokens;
      discard computation for image tokens classified as background prior to processing the image tokens in an object detection model; and
      process only the image tokens classified as foreground in a transformer-based object detection model to generate a detection output.

12. The device of claim 11, wherein the processor is further configured to compute an accumulative cross entropy loss across the image tokens during training of the background-aware vision transformer.

13. The device of claim 11 or 12, wherein the object detection model is a You Only Look at One Sequence (YOLOS) model, and the background-aware vision transformer is configured as a pre-processing block for the YOLOS model, the configuration including upscaling the classifications of image tokens from the resolution of the background-aware vision transformer to the higher resolution expected by the YOLOS model, while preserving relative patch positions, and modifying the YOLOS model to skip computation for tokens classified as background and return zero-valued output tokens for those tokens.

14. The device of any one of claims 11 to 13, wherein the background-aware vision transformer comprises two transformer layers and is configured for deployment on an edge device having limited computational resources.

15. The device of any one of claims 11 to 14, wherein the background-aware vision transformer comprises only two transformer layers to enable deployment on the edge device.

FIG. 1

a) Reference
Image

b) Sparse-DETR
Foreground

c) Focus-DETR
Foreground

d) BAViT
Foreground

FIG. 2

FIG. 3A

FIG. 3B

FIG. 3C

FIG. 4

FIG. 5

EP 4 715 753 A1

FIG. 6A

FIG. 6B

FIG. 7A

FIG. 7B

FIG. 8

# EUROPEAN SEARCH REPORT

**Application Number**

EP 25 20 3659

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI SHUIWANG ET AL: "Adaptive and Background-Aware Vision Transformer for Real-Time UAV Tracking", 2023 IEEE/CVF INTERNATIONAL CONFERENCE ON COMPUTER VISION (ICCV), IEEE, 1 October 2023 (2023-10-01), pages 13943-13954, XP034514912, DOI: 10.1109/ICCV51070.2023.01286 [retrieved on 2024-01-15] * the whole document * | 1-15 | INV. G06V10/28 G06V10/764 G06V10/82 |
| A | EP 4 276 695 A1 (SAMSUNG ELECTRONICS CO LTD [KR]) 15 November 2023 (2023-11-15) * paragraph [0001] - paragraph [0002]; figures 1,2 * * paragraph [0015] - paragraph [0017] * * paragraph [0040] * | 1-15 | |
| A | ZHENG DEHUA ET AL: "Less is More: Focus Attention for Efficient DETR", 2023 IEEE/CVF INTERNATIONAL CONFERENCE ON COMPUTER VISION (ICCV), IEEE, 1 October 2023 (2023-10-01), pages 6651-6660, XP034513795, DOI: 10.1109/ICCV51070.2023.00614 [retrieved on 2024-01-15] * the whole document * | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 1 December 2025 | de Castro Palomares |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 3659

This annex lists the patent family members relating to the patent documents cited in  the above-mentioned European search report.
The members are as contained in the European Patent Office EDP file on
The European Patent Office is in no way liable for these particulars which are merely given for the purpose of information.

01-12-2025

| Patent document cited in search report | Publication date | Patent family member(s) | Publication date |
|---|---|---|---|
| EP 4276695  A1 | 15-11-2023 | EP     4276695 A1 | 15-11-2023 |
|  |  | KR 20230157885 A | 17-11-2023 |
|  |  | US   2023368494 A1 | 16-11-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63698540

**Non-patent literature cited in the description**

- **A DOSOVITSKIY** ; **L BEYER, A.K**. An image is worth 16x16 words: Transformers for image recognition at scale. *arXiv preprint arXiv:2010.11929v2*, 2021
- **A VASWANI** ; **N SHAZEER, N.P.** Attention is all you need.. *arXiv preprint arXiv:1706.03762*, 2017
- **AISHWARYA BHANDARE** ; **VAMSI SRIPATHI, D.K.** Efficient 8-bit quantization of transformer neu- ral machine language translation model. *arXiv preprint arXiv:1906.00532*, 2019
- **ANGELA FAN** ; **EDOUARD GRAVE, A.J.** Reducing transformer depth on demand with structured dropout. *arXiv preprint arXiv:1909.11556*, 2019
- **ANGELA FAN** ; **PIERRE STOCK, B.G.** Training with quantization noise for extreme model com pression. *arXiv preprint arXiv:2004.07320*, 2020
- **BYUNGSEOK ROH** ; **JAEWOONG SHIN, W.S.** Sparse detr: Efficient end-to-end object detection with learnable sparsity. *arXiv preprint ar-Xiv:2111.14330*, 2021
- **DEHUA ZHENG** ; **WENHUI DONG, H.H.** Less is more: Focus attention for efficient detr. *arXiv preprint arXiv:2307.12612*, 2023
- **DENG, J.** ; **SOCHER, R.** ; **FEI-FEI, L.** ; **DONG, W.** ; **LI, K.** ; **LI, L.J.** Imagenet: A large-scale hierarchical image database. *2009 IEEE Conference on Computer Vision and Pattern Recognition(CVPR)*, June 2009, vol. 00, 248-255, https://doi. org/10.1109/CVPR.2009.5206848
- **ELENA VOITA** ; **DAVID TALBOT, F.M**. Analyzing multi-head self-attention: Specialized heads do the heavy lifting, the rest can be pruned. *arXiv preprint arXiv:1905.09418*, 2019
- **EVERINGHAM, M.** ; **VAN GOOL, L.** ; **WILLIAMS, C.K.I.** ; **WINN, J.** ; **ZISSERMAN, A.** The PASCAL Visual Object Classes Challenge 2012 (VOC2012). *Results*, 2012, http://www.pascal-network.org/challenges/VOC/voc2012/workshop/index.html
- **FANG, Y.** ; **LIAO, B.** ; **WANG, X., FANG**. You only look at one sequence: Rethinking transformer in vision through object detection. *Advances in Neural Information Processing Systems*, 2021, vol. 34, 26183-26197
- **HANS THISANKE** ; **CHAMLI DESHAN, K.C.** Se-mantic segmentation using vision transformers: A survey. *arXiv preprint arXiv:2305.03273*, 2023
- **HE, K.** ; **ZHANG, X.** ; **REN, S.** ; **SUN, J.** Deep residual learning for image recognition. *Proceedings of the IEEE conference on computer vision and pattern recognition*, 2016, 770-778
- **HE, L.** ; **REN, X.** ; **GAO, Q.** ; **ZHAO, X.** ; **YAO, B.** ; **CHAO, Y.** The connected-component labeling problem: A review of state-of-the-art algorithms. *Pattern Recognition*, 2017, vol. 70, 25-43
- **J DEVLIN** ; **M CHANG** ; **K.L.: BERT**. Pre-training of deep bidirectional transformers for language understanding. *arXiv preprint arXiv:1810.04805*, 2018
- **KINGMA, D.P.** ; **BA, J.** *Adam: A method for stochastic optimization*, 2017, https://arxiv. org/abs/1412.6980
- **LIN, T.Y.** ; **MAIRE, M.** ; **BELONGIE, S.** ; **BOURDEV, L.** ; **GIRSHICK, R.** ; **HAYS, J.** ; **PERONA, P.** ; **RAMANAN, D.** ; **ZITNICK, C.L.** ; **DOLLAR, P.** *Microsoft coco: Common objects in context*, 2014, http:// arxiv.org/abs/1405.0312
- **LIU, F.** ; **WEI, H.** ; **ZHAO: WB-DETR**. Transformer-based detector without backbone. *2021 IEEE/CVF International Conference on Computer Vision (ICCV)*, 2021, 2959-2967, https://doi.or-g/10.1109/ICCV48922.2021.00297
- **LV, W.** ; **XU, S.** ; **ZHAO, Y.** ; **WANG, G.** ; **WEI, J.** ; **CUI, C.** ; **DU, Y.** ; **DANG, Q.** ; **LIU, Y.** Detrs beat yolos on real-time object detection. *arXiv preprint ar-Xiv:2304.08069*, 2023
- **MAO, A.** ; **MOHRI, M.** ; **ZHONG, Y.** Cross-entropy loss functions. *Theoretical analysis and applications*, 2023, https://arxiv.org/abs/2304.07288
- **NICOLAS CARION** ; **FRANCISCO MASSA, G.S.** End-to-end object detection with transformers. *arXiv preprint arXiv:2005.12872*, 2023
- **NIKITA KITAEV** ; **LUKASZ KAISER, A.L.** Reformer: The efficient transformer. *arXiv preprint ar-Xiv:2001.04451*, 2020
- **RESEARCH, G.** *Vision transformer*, 2023, https://github.com/google-research/vision_transfor-mer

- **REWON CHILD** ; **SCOTT GRAY, A.R.** Generating long sequences with sparse transformers. *arXiv preprint arXiv:1904.10509*, 2019
- **REZATOFIGHI, H.** ; **TSOI, N.** ; **GWAK, J.** ; **SADEGHIAN, A.** ; **REID, I.** ; **SAVARESE, S.** Generalized intersection over union. *A metric and a loss for bounding box regression*, 2019, https://arxiv.org/abs/1902.09630
- **SHENGSHEN** ; **ZHENDONG, J.** Q-bert: Hessian based ultra low precision quantization of bert. *arXiv preprint arXiv:1909.05840*, 2019
- **TERVEN, J.** ; **CORDOVA-ESPARZA, D.** A comprehensive review of yolo: From yolov1 and beyond. *arXiv preprint arXiv:2304.00501*, 2023
- **XIANGCHENG LIU** ; **TIANYI WU, G.G.** Adaptive sparse vit: Towards learnable adaptive token pruning by fully exploiting self-attention. *arXiv preprint arXiv:2209.13802*, 2022
- **Y LIU** ; **M OTT** ; **N.G.: ROBERTA**. A robustly optimized bert pretraining approach. *arXiv preprint arXiv:1907.11692*, 2019
- **YI TAY** ; **DARA BAHRI, L.Y**. Sparse sinkhorn attention. *arXiv preprint arXiv:2002.11296*, 2020
- **YIFEI LIU** ; **MATHIAS GEHRIG, N.M.** Revisiting token pruning for object detection and instance segmentation. *arXiv preprint arXiv:2306.07050*, 2023
- **YONGMING RAO** ; **ZUYAN LIU,W.Z.** Dynamic spatial sparsification for efficient vision transformers and convolutional neural networks. *arXiv preprint arXiv:2207.01580*, 2022
- **YUFEI XU** ; **JING ZHANG, Q.Z.** Vitpose: Simple vision transformer baselines for human pose estimation. *arXiv preprint arXiv:2204.12484*, 2022
- Big bird: Transformers for longer sequences. **ZAHEER, M.** ; **GURUGANESH, G.** ; **DUBEY, K.A.** ; **AINSLIE, J.** ; **ALBERTI, C.** ; **ONTANON, S.** ; **PHAM, P.** ; **RAVULA, A.** ; **WANG, Q.** ; **YANG, L.** Advances in Neural Information Processing Systems. Curran Associates, Inc., 2020, vol. 33, 17283-17297
- **ZE LIU** ; **YUTONG LIN, Y.C.** Swin transformer: Hierarchical vision transformer using shifted windows. *arXiv preprint arXiv:2103.14030*, 2021
- **ZHU, X.** ; **SU, W.** ; **LU, L.** ; **LI, B.** ; **WANG, X.** ; **DAI, J.** Deformable detr: Deformable transformers for end-to-end object detection. *arXiv preprint arXiv:2010.04159*, 2020
- **ZIHANG JIANG** ; **QIBIN HOU, L.Y.** All tokens matter: Token labeling for training better vision transformers. *arXiv preprint arXiv:2104.10858*, 2021